Europäisches Patentamt

European Patent Office

Office européen des brevets

(11) Veröffentlichungsnummer: **0 425 811 A2**

# EUROPÄISCHE PATENTANMELDUNG

(21) Anmeldenummer: 90118269.1

(51) Int. Cl.5: **B29C 45/84**

(22) Anmeldetag: 24.09.90

(30) Priorität: 02.11.89 DE 3936505

(43) Veröffentlichungstag der Anmeldung:
08.05.91 Patentblatt 91/19

(84) Benannte Vertragsstaaten:
AT CH DE ES FR GB IT LI NL

(71) Anmelder: Hehl, Karl
Arthur-Hehl-Strasse 32
W-7298 Lossburg 1(DE)

(72) Erfinder: Hehl, Karl
Arthur-Hehl-Strasse 32
W-7298 Lossburg 1(DE)

(74) Vertreter: Mayer, Friedrich, Dr. et al
Patentanwälte Dr. Mayer & Frank Westliche
24
W-7530 Pforzheim(DE)

(54) Schutzabdeckung an einer Kunststoff-Spritzgiessmaschine.

(57) Die Scheibe (11) der Schutzabdeckung liegt unter dem Druck eines aus einem Schaumkunststoff gebildeten elastischen Druckkörpers (18) rückseitig am Rahmen (10) an. Der Druck-körper (18) ist rückseitig an lamellenartigen Widerlagerelementen (Stützschenkel 13a,14a) des Rahmens (10) abgestützt. Dadurch wird erreicht, daß die Schutzabdekkung einer automatischen Fertigung in höherem Grade zugänglich ist, dementsprechend einen relativ geringen manuellen Montageaufwand erfordert und gegen Erschütterungen und Vibrationen auch bei hoher Lebensdauer der Maschine in hohem Grade unempfindlich ist.

EP 0 425 811 A2

# SCHUTZABDECKUNG AN EINER KUNSTSTOFF-SPRITZGIESSMASCHINE

Die Erfindung betrifft eine Schutzabdeckung entsprechend dem Oberbegriff des Patentanspruches 1.

Schutzabdeckungen dieser Gattung sind periodischen Erschütterungen und Vibrationen unterworfen, die sich durch das periodische Abstoppen bewegter Massen, zum Beispiel bei den Spritzzyklen infolge des Öffnens und Schließens der Spritzgießform bzw. beim Auf- und Absetzen des Plastifizierzylinders auf die Spritzgießform und von der Spritzgießform ergeben. Aus diesem Grunde sind bei den genannten Abdeckungen die Halterungsorgane für die Scheibe und die Scheibe selbst im Verlauf eines langjährigen 'Arbeitslebens' einer Maschine starken Dauerbelastungen ausgesetzt. Diese können zu Lockerungen der Scheibe, zu Sprüngen oder gar Brüchen im Gefolge einer Materialermüdung führen.

Bei einer Schutzabdeckung der genannten Gattung ist es bekannt, die Scheibe mittels eines an ihrem Rahmen abgestützten flexiblen Bandes aus einem hochpolymeren Werkstoff zu haltern, welches Band am Umfang der Scheibe anliegt. Das einen etwa runden Querschnitt aufweisende Band ist mit zwei diametral angeordneten Längsnuten versehen. Nach Montage der Scheibe taucht in die eine Längsnut ein Blechrand des Rahmens und in die diametrale andere Längsnut der Rand der Scheibe ein. In einer weiteren Längsnut des Bandes ist ein Füllerprofil derart eingefügt, daß die Flanken der Längsnuten am Blechrand des Rahmens und am Rand der Scheibe unter Vorspannung anliegen (Katalog 'GHE - Klemmprofile - Glazing Sections - K 52/4-1/1 84). Die Montage von Scheibe und Band im Rahmen erfordert viel Geschick und auch erhebliche physische Kräfte. Sie ist zudem nur mit Spezialwerkzeugen zu bewältigen. Dabei wird das Band zunächst auf dem vertikalen Blechrand des Rahmens der Schutzabdeckung aufgesetzt. Erst danach wird die Scheibe unter starker zeitweiser Deformation im Bereich der die Scheibe aufnehmenden Längsnut mittels des diesbezüglichen Werkzeuges in den Rahmen eingesetzt. In aller Regel ist auch die von erfahrenem Montagepersonal eingesetzte Scheibe noch erheblichen Spannungen unterworfen, was deren Bruchfestigkeit stark beeinträchtigt. Diese Spannungen können abschnittsweise auftreten, weil ein Spannungsausgleich durch Relativbewegungen zwischen Band und Scheibe infolge extrem hoher Friktionskräfte praktisch nicht stattfindet.

Aus obigem folgt, daß das Einbringen der Scheibe in den Rahmen und deren Halterung einer Automation weitgehend unzugänglich ist. Schließlich ist darauf hinzuweisen, daß eine mittels eines flexiblen Bandes im obigen Sinne gehalterte Scheibe bei vorsichtiger Abnahme des Bandes aus dem Rahmen herausgenommen und nachher wieder eingesetzt werden kann, ohne daß eine solche Operation hinterher nachweisbar wäre, so daß grundsätzlich die Möglichkeit eines unbefugten und nicht nachweisbaren Eingriffs in kritische Gefahrenzonen der Maschine besteht. Dies kann für den Hersteller von schwerwiegendem Nachteil sein, wenn ein Betreiber der Maschine nach einem Unfall unberechtigte Haftungsansprüche stellt.

Bei größeren Scheiben von höherem Gewicht ist es erforderlich, für das Band einen Werkstoff von relativ hohem Härtegrad zu wählen, der im übrigen im Lauf der Zeit weiter an Elastizität einbüßen und verspröden kann.

Hiervon ausgehend liegt der Erfindung die Aufgabe zugrunde, eine Schutzabdeckung der eingangs genannten Gattung derart weiterzubilden, daß sie einer automatischen Fertigung in höherem Grade zugänglich ist, dementsprechend einen relativ geringen manuellen Montageaufwand erfordert und gegen Erschütterungen und Vibrationen auch bei hoher Lebensdauer der Maschine in hohem Grade unempfindlich ist.

Diese Aufgabe wird durch die im Kennzeichen des Patentanspruches 1 genannten Merkmale gelöst.

Bei einer solchen Lösung der Aufgabe sind Schutzabdeckungen jeglicher Größen und Gewichtsklasse auch über lange Zeiträume einer intensiven Benutzung erschütterungs- bzw. vibrationsfest. Andererseits ist es im Bedarfsfalle auch möglich, leichtere Scheiben und Scheiben günstigerer Preisklasse einzusetzen, da diese dank der erfindungsgemäßen Einbettung weniger beansprucht sind. Der manuelle Montageanteil beschränkt sich nahezu auf das Einschieben bzw. Einlegen der Scheibe in die Falze des in weitgehend automatischer Fertigung gestanzten und verformten bzw. gespritzten Rahmens. Bei alldem kann das Einbringen des hochelastischen Lagerbettes für die Scheibe wiederum in automatischen Fertigungsverfahren erfolgen, indem zum Beispiel ein auch in entsprechender Arbeitsbahn laufender Roboter den Schaumkunststoff bei vorzugsweise horizontaler Lage der Schutzabdeckung in geeigneter Dosierung appliziert.

Geeignete Schaumkunststoffe sind auf dem Markt in breiter Palette erhältlich (Meyers Lexikon der Technik und der exakten Naturwissenschaften, bibliogr. Institut Mannheim/Wien/Zürich. Mannheim 1970, 3. Band O-Z, S.2254). Besonders bewährt haben sich Schaumkunststoffe mit relativ geringer Reaktion-Ausdehnung. Dies gilt insbesondere auch gemäß einer Weiterbildung des Patentgegenstandes bei Polyurethan-Schaumstoffen, bei welchen die endständige Isocyanat-Gruppe mit Wasser unter Kohlendioxid-Entwicklung reagiert, das als Treibgas fungiert. Auf diese Weise können Druckkörper für den Anlagedruck hergestellt werden, welche einerseits die erforderliche Elastizität zur Vibrationsdämpfung und andererseits die erforderliche Festigkeit aufweisen, welche die genannten Eigenschaften, wie Versuche ergeben, über nahezu unbegrenze Zeiträume beibehalten.

Nachstehend wird die Erfindung an zwei Ausführungsbeispielen beschrieben.

Es zeigen:

Figur 1 Die als Schutzschieber ausgebildete Schuztzabdeckung an einer Kunststoff-Spritzgießmaschine in perspektivischer Darstellung,

Figur 2 einen quer geschnittenen Ausschnitt aus der Schutzabdeckung gemäß Figur 1 im Bereich des unteren Rahmenschenkels in vergrößerter Darstellung vor dem Einbringen des elastischen Druckkörpers,

Figuren 3,4 den Ausschnitt gemäß Figur 2 in Rückansicht und Draufsicht,

Figur 5-7 eine Variante der Schutzabdeckung in einer Darstellung entsprechend den Fign. 2-4,

Figur 8 einen Schnitt nach Linde VIII-VIII von Figur 9,

Figur 9 einen Ausschnitt aus der fertigen Schutzabdeckung in einer etwa der Figur 3 entsprechenden, jedoch vergrößerten Darstellung und

Figur 10 einen Schnitt nach Linie X-X von Figur 9.

Im zeichnerisch dargestellten Ausführungsbeispiel ist die Schutzabdeckung Bestandteil einer Kunststoff-Spritzgießmaschine. Dank ihrer Unempfindlichkeit und Robustheit eignet sie sich allgemein für Be- und Verarbeitungsmashinen, die betriebsbedingt rhythmischen Erschütterungen und Vibrationen unterliegen und bei denen, z.B. beim Export in industriell wenig entwickelte Länder Beanspruchungen durch Stoß und Schlag zu erwarten sind.

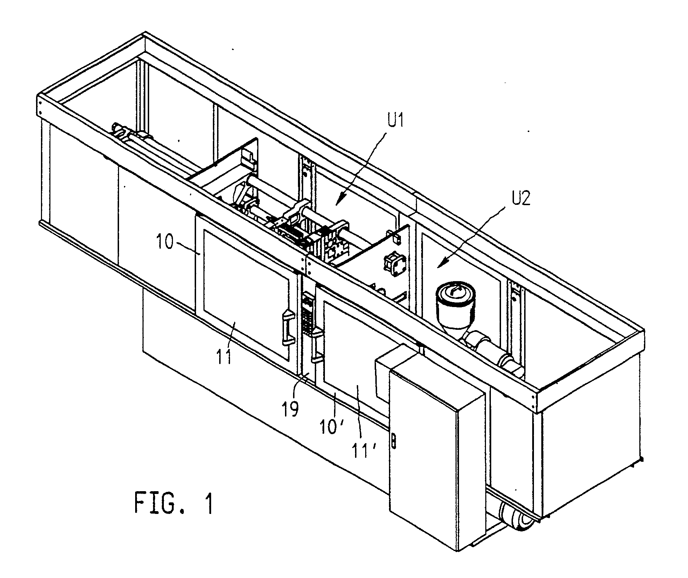

An der Kunststoff-Spritzgießmaschine gemäß Fig. 1 sind als Schutzschieber ausgebildete Schutzabdeckungen vorgesehen, die in Schutzposition eine mittige stationäre Trägersäule 19 begrenzen und die nach links bzw. nach rechts aus ihrer Schutzposition verfahrbar sind. Die Schutzschieber schirmen unfallgefährdete Bereiche wie den Bereich U1 des Formspannraumes der Schließeinheit und den Bereich U2 des Plastifizierzylinders der Spritzeinheit ab und ermöglichen dennoch eine laufende Sichtkontrolle dieser Bereiche.

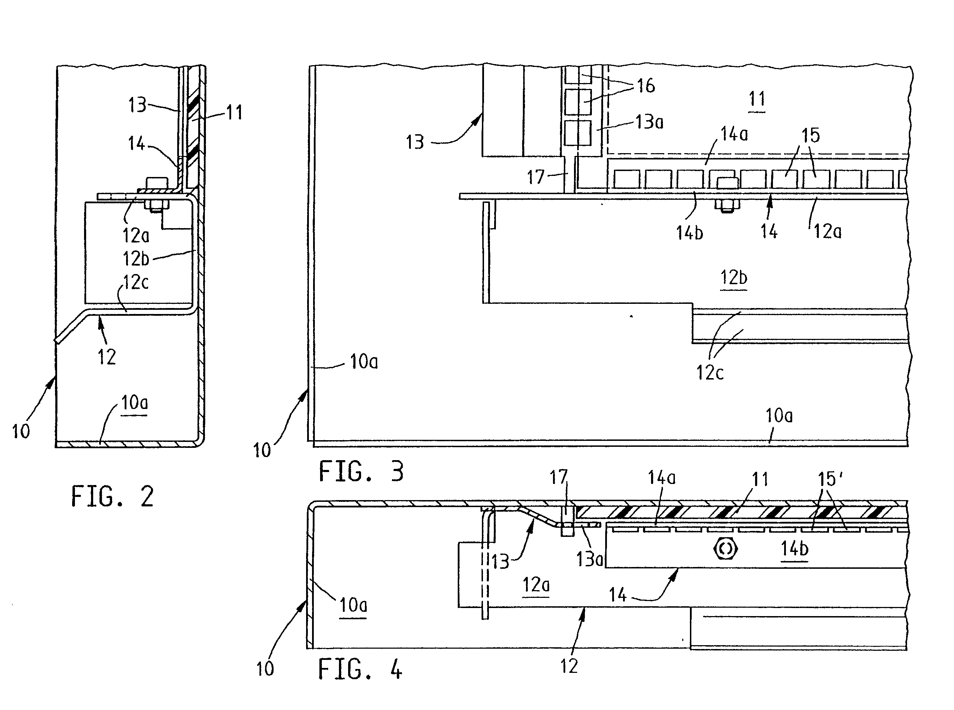

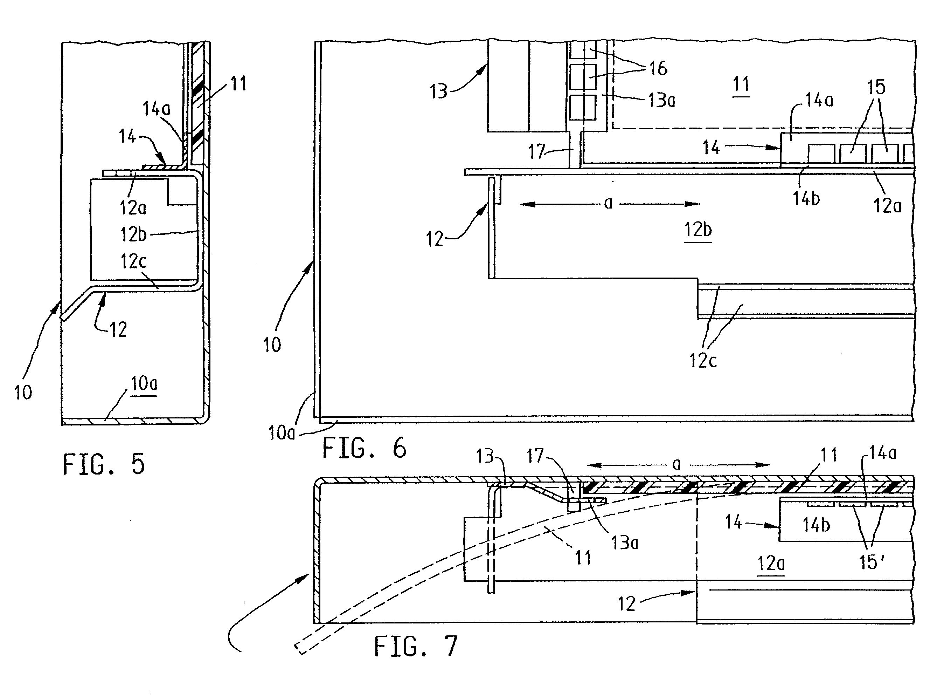

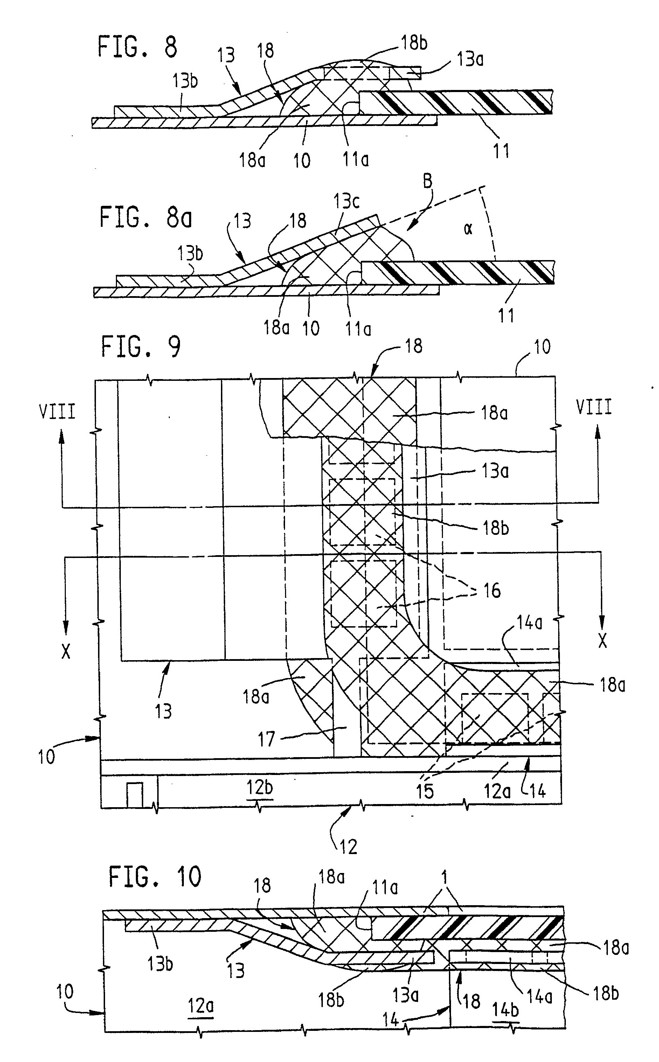

Wie aus den Fign. ersichtlich, ist die Schutzabdeckung aus einem viereckigen Rahmen und einer an diesem Rahmen gehalterten optisch durchlässigen Scheibe 11 aus einem hochpolymerem Werkstoff aufgebaut. Der aus einem gestanzten Stahlblech-Stück geformte Rahmen weist einen rechtwinklig abgebogenen RAnd 10a auf. Der Randbereich der Scheibe 11 liegt unter dem Druck (Anlagedruck) wenigstens eines aus einem Schaumkunststoff gebildeten elastischen Druck-Körpers 18 rückseitig am Rahmen 10 an. Rückseitig ist der Druck-Körper 18 an Widerlagerelementen des Rahmens 10 abgestützt, wie insbesondere aus den Fign. 8-10 erkennbar. Der Druck-Körper 18 besteht aus einem Polyurethan-Schaumstoff, der zwischen den Widerlagerelementen und der benachbarten Oberfläche der Scheibe 11 derart eingeschäumt wird, daß der sich bildende elastische Druck-Körper sowohl am Randbereich der Scheibe alsauch an deren Kante 11a und dem benachbarten Bereich desRahmens 10 unter Druck anliegt. Die das Treibgas freisetzenden chemischen Reaktionen setzen dabei erst ein, wenn die reagierenden Komponenten des Ausgangsmaterials die Düse des vom Roboter geführten Applikationsgerätes erlassen und eine Vermischung der Komponenten eintritt. Der den Anlagedruck ausübende Druck-Körper 18 ist im Gefolge der bei seiner Bildung erfolgenden Ausdehnung senkrecht zur Ebene der Scheibe 11 dauerhaft vorgespannt. Im konkreten Ausführungsbeispiel ist der elastische Druck-Körper 18 ein sich linear entlang dem Scheibenrand erstreckendes und dieses überlappendes Band von annäherungsweise gleichem Querschnittsprofil. Der Druck-Körper 18 haftet nach seiner Bildung an den von ihm beaufschlagten Flächen der Scheibenbreitseite, der Scheibenkante 11a und des Rahmens 10. Die lamellenartige Stützelemente (Stützschenkel 13a,14a) sind mit linear angeordneten Durchbrüchen 16,15 versehen. Diese liegen teils im Bereich der Scheibe 11, teils im Bereich des Rahmens 10, so daß sich der durch diese Durchbrüche 15,16 eintretende Schaumstoff über den Randbereich der Scheibe, die Kante 11a und dem benachbarten Bereich des Rahmens auflegt. Im zeichnerischen Ausführungsbeispiel sind die Widerlagerelemente an der Rückseite des metallenen Rahmens 10 angeschweißt. Die Widerlagerelemente sind durch Profilschienen 13,14 aus Blech mit lamellenartigen Stützschenkeln 13a,14a gebildet. Dabei dienen abgebogene Blechstreifen als vertikale Profilschienen. Die horizontalen Profilschienen 14 sind durch Winkelprofile gebildet. Wie insbesondere aus den Figuren 8,10 ersichtlich, übergreift ein zur Scheibenebene paralleler Stützschenkel 13a den Randbereich der Scheibe 11 und geht über einen schrägen Zwischenabschnitt in den Befestigungsschenkel 13b über, der am Rahmen angeschweißt ist. Die die horizontalen Profilschienen 14 bildenden Winkelprofile weisen im gezeichneten Ausführungsbeispiel je einen Stützschenkel 14a auf, der parallel zur Scheibenebene liegt und sind mit einem Befestigungsschenkel 14b versehen. Der gegenseitige Abstand der Durchbrüche 16,15 ist derart bemessen, daß der fortschreitend aufgebrachte Kunststoff-Schaumstoff ein fortlaufendes, den Rand der Scheibe 11 übergreifendes Druck-Körper-Band bildet. Die untere horizontale Profilschiene 14 der als Schutzschieber ausgebildeten Schutzabdeckung ist über eine Schaltorgane aufnehmende Profilschiene 12 mit dem Rahmen 10 verbunden. Die am oberen horizontalen Rahmenschenkel angeschweißte horizontale Profilschiene 14 ist genauso ausgebildet und in gleicher Weise über eine Profilschiene 12 mit dem Rahmen 10 verbunden wie die untere Profilschiene 14. Wie aus den Fign. 4,7 erkennbar, erstrecken sich die Durchbrüche 15 im Stützschenkel 14a in einen Bereich 15' geringfügig in den Befestigungsschenkel 14b hinein. Dabei wird sichergestellt, daß bei der Applikation auch die untere horizontale Kante der Scheibe 11 vom Schaumstoff beaufschlagt werden kann. Im zeichnerischen Ausführungsbeispiel weist der elastische Druck-Körper 18 ein zwischen Scheibe 11 und Rahmen 10 befindliches drückendes Teil 18a auf, das über die Durchbrüche 16,15 mit einem rückseitigen, den Stützschenkel 13a bzw. 14a teilweise hintergreifendes verankerndes Teil 18b verbunden ist.

Im Ausführungsbeispiel der Figuren 2 bis 4 ist der Befestigungsschenkel 14b des Winkelprofils mit der Profilschiene 12 leicht lösbar verschraubt. In diesem Falle wird diese untere Profilschiene 14 bei der Fertigung der Schutzabdeckung erst angebracht, wenn die Scheibe durch Einschieben von unten in lagegerechte Position gebracht worden ist.

In der Fertigungsvariante gemäß den Figuren 5 bis 7 ist das horizontal angeordnete Winkelprofil auf der einen Seite der Schutzabdeckung in derartigem Abstand a (Fig. 6,7) vom vertikal angeordneten, abgekröpftem Blechstreifen (Profilschiene 13), daß die Scheibe 11 unter Verbiegung in Falzen des Rahmens 10 einfügbar ist, welche Falze durch die lamellenartigen Stütz- elemente 13a, 14a gebildet sind.

Der Vorgang des seitlichen Einschiebens ist in Figur 7 in gestrichelter Linienführung angedeutet.

Ein weiteres Ausführungsbeispiel der Ausbildung der vertikalen lamellenartigen Widerlagerelemente 13 und der damit verbundenen Gestaltung des bandartigen Druckkörpers 18 ist in Figur 8a dargestellt. Bei diesem Beispiel schließt der Stützwinkel 13c der Profilschiene 13 einen Winkel $\alpha$ zur Scheibenebene ein. Unter Verzicht auf Durchbrüche wird bei Fertigung der Schaumstoff in Richtung des Pfeiles B unter den Stützschenkel 13c eingeführt.

Im konkreten Ausführungsbeispiel wurde als Ausgangsmaterial zur Bildung des Druckkörpers 18 ein Polyurethan-Schaumstoff verwendet, dessen Reaktionskomponenten bei Austritt aus der Düse des Applikationsgerätes infolge chemischer Umsetzungen Kohlendioxyd als Treibgas freisetzen.

Mit 17 ist ein Anschlag zur Fixierung der Scheibe 11 vor Einbringung der Druckkörper bezeichnet.

## Ansprüche

1. Schutzabdeckung an einer Kunststoff-Spritzgießmaschine, die periodischen Erschütterungen und Vibrationen unterworfen ist, zur Abschirmung unfallkritischer Bereiche mit einer an einem Rahmen (10) der Schutzabdeckung gehalterten, optisch durchlässiger Scheibe (11) aus hochpolymerem Werkstoff, sowie mit wenigstens einem am Rahmen (10) abgestützten elastischen Druckkörper (18) aus hochpolymerem Werkstoff, welcher zur Halterung der Scheibe (11) am Rand der Scheibe (11) wenigstens abschnittsweise unter Vorspannung anliegt, dadurch gekennzeichnet, daß der Randbereich der Scheibe (11) unter dem Anlagedruck des aus einem Schaumkunststoff gebildeten Druckkörpers (18) an einer Anlagefläche des Rahmens (10) rückseitig anliegt, welcher Druckkörper (18) rückseitig an Stützschenkeln (13a, 14a) abgestützt ist, die mit dem Rahmen (10) verbunden sind.

2. Schutzabdeckung nach Anspruch 1, dadurch gekennzeichnet, daß der Druckkörper (18) aus einem Polyurethan-Schaumstoff mit relativ geringer Reaktionsausdehnung gebildet ist und im Gefolge der bei seiner Bildung erfolgenden Ausdehnung senkrecht zur Ebene der Scheibe (11) dauerhaft vorgespannt ist.

3. Schutzabdeckung nach einem der Ansprüche 1 oder 2, dadurch gekennzeichnet, daß der Druckkörper (18) ein sich dem Scheibenrand entlang linear erstreckendes und den Scheibenrand überlappendes Band von annäherungsweise gleichem Querschnittsprofil ist und an Flächen von Breitseite und Kante (11a) der Scheibe (11) sowie am Rahmen (10) unter Verhaftung anliegt.

4. Schutzabdeckung nach einem der vorhergehenden Ansprüche, dadurch gekennzeichnet, daß die an Profilschienen (13, 14) gebildeten Stützschenkel (13a, 14a) mit Durchbrüchen (16, 15) versehen sind, die sich teils über die Scheibe (11), teils über den Rahmen (10) erstrecken.

5. Schutzabdeckung nach einem der vorhergehenden Ansprüche, dadurch gekennzeichnet, daß die Stützschenkel (13a, 14a) parallel zur Ebene der Scheibe (11) liegen wobei der Druckkörper (18) in einem mittleren Bereich (18a) über die Durchbrüche (16, 15) in rückseitige, den Stützschenkel (13a bzw. 14a) teilweise hintergreifende, verankernde Teile (18b) übergeht.

6. Schutzabdeckung nach einem der Ansprüche 1-4, dadurch gekennzeichnet, daß die Stützschenkel (13a, 14a) einen Winkel (Alpha) zur Ebene der Scheibe (11) einschließen (Fig. 8a).

7. Schutzabdeckung nach einem der vorhergehenden Ansprüche, dadurch gekennzeichnet, daß im Falle der Anordnung der Schutzabdeckung in einer vertikalen Ebene die horizontalen Profilschienen (14) auf der einen Seite der Schutzabdeckung in derartigem Abstand (a in Fig. 6) von der vertikalen Profilschiene (13) enden, daß die Scheibe (11) unter Verbiegung in Falzen des Rahmens (10) einfügbar ist, welche Falze durch die Stützschenkel ( 14a) gebildet sind (Fig. 7).

8. Schutzabdeckung nach einem der Ansprüche 1-6, dadurch gekennzeichnet, daß die horizontalen Profilschienen (14) mit dem Rahmen lösbar verbunden sind.

9. Schutzabdeckung nach einem der vorhergehenden Ansprüche, gekennzeichnet durch ihre Verwendung an Maschinen zur Verarbeitung von Kunststoffen, die beim Betrieb periodischen Erschütterungen unterworfen sind.

FIG. 1

FIG. 2

FIG. 3

FIG. 4

FIG. 5

FIG. 6

FIG. 7

FIG. 8

FIG. 8a

FIG. 9

FIG. 10